(19)

**Europäisches Patentamt**
**European Patent Office**
**Office européen des brevets**

(11) **EP 2 346 933 B1**

(12) **EUROPEAN PATENT SPECIFICATION**

(45) Date of publication and mention
of the grant of the patent:
**29.06.2016 Bulletin 2016/26**

(21) Application number: **09756278.9**

(22) Date of filing: **30.10.2009**

(51) Int Cl.:
*C08J 3/20* (2006.01)    *C08J 9/00* (2006.01)
*C08J 9/06* (2006.01)    *B29B 7/00* (2006.01)
*B29B 7/40* (2006.01)    *B29B 7/90* (2006.01)
*B29C 47/00* (2006.01)   *B29C 47/60* (2006.01)

(86) International application number:
**PCT/EP2009/064401**

(87) International publication number:
**WO 2010/049532 (06.05.2010 Gazette 2010/18)**

(54) **PVC PROFILES WITH HIGH CONTENTS OF MINERAL FILLER AND THEIR USES**

PVC-PROFILE MIT HOHEN GEHALTEN AN MINERALISCHEM FÜLLSTOFF UND IHRE
VERWENDUNGEN

PROFILÉS EN PVC À TENEUR ÉLEVÉE EN CHARGE MINÉRALE ET UTILISATIONS DE CES
PROFILÉS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **31.10.2008 BE 200800593
31.10.2008 US 110204 P**

(43) Date of publication of application:
**27.07.2011 Bulletin 2011/30**

(73) Proprietor: **Eurocell Profiles, Ltd.
Alfreton
Derbyshire DE55 4RF (GB)**

(72) Inventors:
• **BUSSELS, Raf
B-3990 Peer (BE)**
• **GABRIELS, Joseph Philip
B-3980 Tessenderlo (BE)**
• **SPIJKERMAN, Christianus Johannes
NL-7552 CK Hengelo (NL)**

(74) Representative: **Paemen, Liesbet R.J. et al
De Clercq & Partners cvba
Edgard Gevaertdreef 10 a
9830 Sint-Martens-Latem (BE)**

(56) References cited:
**US-A- 4 239 679        US-A- 4 368 284
US-A- 4 455 398        US-A- 5 437 826
US-A1- 2007 078 191**

• **N. NASSIF ET AL: "Amorphous layer around
aragonite platelets in nacre", PROCEEDINGS OF
THE NATIONAL ACADEMY OF SCIENCES, vol.
102, no. 36, 6 September 2005 (2005-09-06), pages
12653-12655, XP055177941, ISSN: 0027-8424,
DOI: 10.1073/pnas.0502577102**

Remarks:
The file contains technical information submitted after
the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### Technical field

The invention relates to PVC profiles with high contents of naturally occurring mineral filler and their applications.

### Background

Polyvinyl chloride polymer (PVC) is a synthetic material that can be applied in various industries for its versatile physical and chemical characteristics. There is a demand for reinforced PVC because sagging or expansion/shrinking of a PVC profile are undesirable in various applications.

EP 0085778 states that generally the best reinforcement materials are fibre structures. Fibre structures that can be used are synthetic fibres (aramid or carbon fibres), mineral fibres (glass fibre) or natural fibres (flax, wood fibres). The use of synthetic fibres leads to a substantial increase in the cost of raw materials which make a PVC profile thus reinforced not economically attractive. Mineral fibres should be avoided also for health reasons related to inhaling glass fibre dust. A disadvantage of natural fibres, like for example flax or wood, is their variability in composition and, consequently, their fluctuating quality. They are sensitive to humidity and consequently they can rot and mould, even when incorporated into a PVC profile. A further disadvantage of synthetic or natural fibres is that they significantly hamper the processing of PVC.

In US2007/0078191 PVC was reinforced by means of increased quantities of glass fibre. The use of large quantities of glass fibre is disadvantageous. Glass fibres are very abrasive, and do significant damage to metal machine parts. As a consequence, repair and replacements must be carried out frequently. Damaging the die needed for the production of PVC profiles, will cause loss of dimensional stability and increased rejection percentages.

US 4,368,284 relates to a composite material comprising polyvinyl chloride, talc and a polyamide and/or amide compound. The talc used is comprised of 85% or more by weight of particles having a diameter of 10 microns or less. The polyamide used has a softening point of less than 200 DEG C. The amide compound used is in preference alkylene bis-amide or methylolated aliphatic amide. The composite material contains up to 30 parts by weight of the polyamide or the amide compound per 100 parts by weight of the talc used.

US5,437,826 theoretically discloses a method of extruding a substantially uniform polymer composition made up of polyvinylchloride, a stabilizing additive composition comprising 20-90 parts PVC and up to 70% of a mineral filler, glass fibers and up to 40% by weight of a filler like talc or mika. Only the specific use of calcium carbonate as a filler is disclosed. As calcium carbonate contributes only minimally to the flexural modulus, the compositions generated in US5,437,826 do not have the flexural modulus of at least 5 Gpa. US5,437,826 does not suggest using more than 25% mineral filler when aiming to increase flexural modulus.

US 4,455,398 describes a glass fiber-reinforced polyvinyl chloride composition containing glass fibers and a maximum of 25%$CaCO_3$. US 4,455,398 mentions that a too high mineral filler content haz a negative influence on the mechanical improvements of the mechanical properties which are to be brought about by the use of glass fibers.

Glass fibre reinforced profiles, produced by means of a pultrusion technique, whereby thermosetting polymer and reinforcing fibres are made into a profile, have the disadvantage that the joining between the fibre and the polymer is often insufficient and coupling agents must be used. Moreover the material cannot be recycled. Furthermore the raw material cost and the cost for equipment is high.

Consequently there is a need for new PVC profiles. The purpose of this invention is to at least partially solve the problems mentioned above.

### Summary

The invention provides PVC profiles with high naturally occurring mineral filler content and a description of their use.

In a first aspect, the invention relates to granulates or profiles made of a reinforced polyvinyl chloride polymer that comprise at least 40 weight parts, preferably at least 60 weight parts, most preferably at least 80 weight parts of naturally occurring mineral filler for every 100 weight parts of polyvinyl chloride (PVC), and PVC with a K-value of 50-68, characterized in that said granulate or profile has a flexural modulus of at least 5 GPa, preferably at least 8 GPa, more preferably at least 10 GPa, wherein the naturally occurring mineral filler is selected from a group including wollastonite, vermiculite, talc, mica, and/or combinations thereof.

In particular embodiments the naturally occurring mineral filler of the granulates or profiles is talc and/or mica. In particular embodiments the reinforced polyvinyl chloride polymer composition is substantially free of natural and mineral fibres.

In particular embodiments the naturally occurring mineral filler of the the granulates or profiles comprises mica, and wherein the flexural modulus is at least 15 GPa.

In particular embodiments the naturally occurring mineral filler of the the granulates or profiles comprises talc, and wherein the flexural modulus is at least 10.8 GPa.

In particular embodiments the granulate or profile is made of a reinforced polyvinyl chloride polymer with a K-value between 64 and 68.

In particular embodiments of the granulate or profile of the invention, the naturally occurring mineral filler has an average grain size between 0.5 and 50 $\mu$m; said talc preferably has an average grain size d50 between 0.5 and 5 $\mu$m and said mica has an average grain size d50 between 30 and 35 $\mu$m.

In particular embodiments of the granulate or profile according to the invention has a coefficient of linear thermal expansion (CLTE) lower than $25 \times 10^{-6}$ mm/mm/K, preferably lower than $20 \times 10^{-6}$ mm/mm/K, more preferably lower than $15 \times 10^{-6}$ mm/mm/K.

In particular embodiments the profile is provided with hollow cavities.

In particular embodiments the natural filler is talc.

In a second aspect, the invention relates to a method for obtaining a granulate or a profile according to the invention, comprising at least 40 weight parts of naturally occurring mineral filler for every 100 weight parts of polyvinyl chloride (PVC), and PVC with a K-value of 50-68, characterized in that said granulate or profile has a flexural modulus of at least 5 GPa comprising the steps of:

a) preparation of a pre-reinforced polymer by mixing polyvinyl chloride polymer with a quantity A of a naturally occurring mineral filler at a temperature lower than the melting temperature of the polyvinyl chloride polymer,
b) mixing the pre-reinforced polymer obtained under a) with a quantity B of a naturally occurring mineral filler at a temperature higher than 180°C to obtain a reinforced polyvinyl chloride polymer,
c) optionally granulating the reinforced polyvinyl chloride polymer obtained in step b),
d) pressing the reinforced polymer obtained in step b) or the granulate obtained in step c) through a die to obtain said granulate or profile.

In particular embodiments, the method is characterized in that said quantity A is between 2 and 40 parts per hundred parts of the polyvinyl chloride polymer (phr).

In particular embodiments, the method is characterized in that the weight ratio of quantity A over quantity B is at least 0.1, preferably at least 0.2, more preferably at least 0.25, most preferably at least 0.3.

In particular embodiments, the method is characterized in that the total weight of naturally occurring mineral filler (A+B) to the weight of polyvinyl chloride polymer, is preferably between 0.4 and 2.5, more preferably between 0.6 and 1.5, most preferably between 0.8 and 1.2.

In particular embodiments, the method further comprises the step of adding a processing aid in a quantity of between 0 and 15 weight%; preferably between 5 and 15 weight%.

In particular embodiments, the method further comprises the step of adding a thermal stabilizer in a quantity of between 0 and 5 weight%; preferably between 1 and 4 weight%; most preferably around 4 weight%, wherein said thermal stabilizer is preferably a blocked thiol type stabilizer.

In a third aspect, the invention further provides a granulate or profile obtained with a method of the invention.

Possible usages of these PVC profiles will be described in a further aspect. In particular, the invention further provides the use a granulate or profile of the invention as a reinforcement element, preferably in a window-frame or fencing. In particular embodiments, said reinforcement element is used as basis for a suspended structure or closure such as a fitting. In particular embodiments, the profile is fastened with nails or screws.

In order to better show the characteristics of the invention, an illustration of some preferred embodiments, but not limiting in nature, will be described below.

**Description of the invention**

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The terms "comprising", "comprises" and "comprised of also include the term "consisting of". The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +1-5% or less, more preferably +/-1 % or less, and still more preferably +/-0.1% or less of and from the specified value, insofar such variations are appropriate to perform in the disclosed invention. It is to be understood that the value to which the modifier "about" refers is itself also specifically, and preferably, disclosed.

All documents cited in the present specification are hereby incorporated by reference in their entirety.

Generally it is assumed that in order to obtain reinforced PVC, fibrous materials must be used as a reinforcement material. In the current invention the term **"fibrous materials"** means glass fibres, aramid fibres, carbon fibres and/or combinations thereof. The quantity of reinforcing material is increased, in order to increase the reinforcement level. However, mixing and handling problems arise with high quantities of reinforcing fibres; compositions are no longer sufficiently homogeneous which negatively affects the mechanical performance, and PVC profiles show bulging fibre materials on the surface.

The inventors have been able to make reinforced PVC profiles, exclusively based on naturally occurring mineral filler. By the term **"naturally occurring mineral filler"** it is meant a filler which can be found in nature and except for a milling step can be used without the need for a manufacturing process. The denomination mineral indicates an element or chemical compound that is normally crystalline and that has been formed as a result of geological processes. Glass fibre production requires a manufacturing process, is not naturally occurring as it is produced from $SiO_2$. Wood fibres are not mineral.

As referred to herein, **"naturally occurring mineral filler"** particularly means wollastonite, vermiculite, talc, mica and/or combinations thereof. In the context of the present invention, the naturally occurring mineral filler in a profile is selected from a group including wollastonite, vermiculite, talc, mica, and/or combinations thereof. In a preferred embodiment of the invention, the naturally occurring mineral filler in a profile is talc and/or mica. If a stiff profile is desired, mica will have the preference. If a profile is desired with a reduced coefficient of linear thermal expansion, talc is most advantageous.

In doing so, they were not hampered by mixing problems. The quality of highly filled PVC profiles was good. In this current invention, the term **"highly filled"** means high contents of naturally occurring mineral filler. A PVC profile is highly filled from the moment in which at least 25 weight parts of naturally occurring mineral filler are used per 100 weight parts of polyvinyl chloride. This is also expressed with the term **"phr"**, which means **"parts per hundred resins"**.

According to the claimed invention, profiles are made of a reinforced polyvinyl chloride polymer comprising at least 60 weight parts of naturally occurring mineral filler for every 100 weight parts of polyvinyl chloride (PVC). More preferably PVC profiles contain at least 80 weight parts, most preferably at least 100 weight parts of filler mineral. The possibility of replacing reinforcing fibrous materials with reinforcing naturally occurring mineral filler has the advantage that the price of PVC profiles can be kept down, not only by saving on raw materials, but also by saving on repair and replacement costs and by reducing the percentage of rejected products. When large quantities of fibres are used, binding problems often arise and coupling agents must be applied. The invention has the advantage that no coupling agents have to be added. The reinforced PVC profiles show a smooth surface.

According to the claimed invention, PVC with a K-value between 50 to 68 is used. The **"K-value"** of a polymer is a measure of the molecular weight and it is based on the inherent viscosity. A K- value between 50 and 68 corresponds to an average molecular weight of about 40000-100000 g/mol. In a more preferred embodiment, the polyvinyl chloride polymer has a K-value between 60 and 68. In a most preferred embodiment according to the invention, the PVC has a K-value between 64 and 68. A K-value of 65 is advantageous because of its good workability and mechanical characteristics. PVC can be obtained commercially in the form of powder. The PVC can also be applied in the form of scrap. By the term **"scrap"** recyclable PVC-based materials are meant that are the result of starting up or shutting down extrusion lines, or PVC-based materials that are out-of-specification. In a preferred embodiment, a method comprises extruding a formulation comprising at least 10 weight% scrap.

Consequently, the invention provides PVC profiles, with the characteristic that at least 40 weight parts, preferably 60 weight parts of reinforcing filler are used per 100 weight parts of PVC, more preferably at least 80 weight parts, most preferably at least 100 weight parts, and the PVC preferably has a K-value between 50 and 68, more preferably between 60 and 68, most preferably between 64 and 68, typically 65. In a preferred embodiment of the invention profiles are made of reinforced polyvinyl chloride polymer with a K-value between 64 and 68.

In a preferred embodiment, the naturally occurring mineral filler is talc and/or mica. Talc is a hydrated magnesium silicate, which has the following chemical structure formula: $Mg_3Si_4O_{10}(OH)_2$. For its application, it is ground to a powder with an average particle size between 0.5 $\mu$m and 20 $\mu$m. It is commercially available. Mica should preferably be of the muscovite kind, this is a phyllosilicate mineral, with the following chemical structure formula: $KAl_2(AlSi_3)O_{10}(OH,F)_2$. To apply it, it is ground to a powder with an average grain size between 0.5 $\mu$m and 40 $\mu$m. It is commercially available. These minerals typically provide the PVC profiles with an improved fire resistance, a decreased coefficient of linear thermal expansion (CLTE) and a higher stiffness. This is an interesting characteristic when used for building components. Therefore, the invention provides PVC profiles, wherein the naturally occurring mineral filler is talc and/or mica. In an embodiment, the naturally occurring mineral filler is talc and/or mica with an average grain size between 0.5 and 40 $\mu$m.

In a preferred embodiment, the naturally occurring mineral filler is talc and/or mica with an average grain size between 0.5 and 5 μm. In a more preferred embodiment, the naturally occurring mineral filler is talc and/or mica with an average grain size between 0.5 and 3 μm for talc and between 30 and 35 μm for mica. Preferably the grains have an elongated shape and are platelets. Average grain size of a naturally occurring mineral filler may be determined by measuring techniques known to a person skilled in the art. For example, the method as described in ISO 13320.

Due to the large quantities of naturally occurring mineral filler, PVC profiles made according to the embodiments of the invention are less flexible and not easily breakable. A profile according to the claimed invention has a flexural modulus of at least 5 GPa. A more preferred embodiment has a flexural modulus of at least 8 GPa. The most preferred embodiment has a flexural modulus of at least 10 GPa. By the term **"flexural modulus"** it is meant the flexural modulus of elasticity, also defined as the ratio of flexural stress over flexural strain. The flexural modulus of a material can be measured by techniques known to a person skilled in the art, for instance according to ISO 178.

The advantage of an improved flexural modulus is that PVC profiles can be used in applications where profiles must have large dimensions. Because of their increased stiffness they will sag less easily. This is useful in applications where metal reinforcements are currently applied. For example, this is the case for profiles for (sliding) doors and windows. Therefore, the invention provides PVC profiles with a flexural modulus of at least 5 GPa, more preferably at least 8 GPa, most preferably at least 10 GPa.

In a preferred embodiment, a profile has a coefficient of linear thermal expansion (CLTE) lower than $25 \times 10^{-6}$ mm/mm/K. In a more preferred embodiment, a profile has a coefficient of linear thermal expansion lower than $20 \times 10^{-6}$ mm/mm/K. In a most preferred embodiment, a profile has a coefficient of linear thermal expansion lower than $15 \times 10^{-6}$ mm/mm/K. The term **"coefficient of linear thermal expansion"** describes by how much a material will expand for each incremental change in temperature, as given by the formula:

$$\alpha = \frac{dl}{l_0 \times dT}$$

where:

$dl$ = the change in length of material in the direction being measured
$l_o$ = initial length of material in the direction being measured
$dT$ = the change in temperature over which dl is measured

Coefficients of linear thermal expansion can be measured by techniques known to a person skilled in the art. Coefficients of linear thermal expansion may for instance be determined with a silica dilatometer according to ASTM D 696 or ISO 11359. This characteristic of reduced linear thermal expansion has the advantage of profiles being less subject to shrinking and expansion when exposed to different temperatures. This is advantageous in applications where high dimensional stability is required and where the profiles are exposed to weather conditions, for example windows, doors, gates, fences, siding or decking. They are suitable for replacing reinforcement elements made of steel (CLTE = $13 \times 10^{-6}$ mm/mm/K) or aluminium (CLTE = $22 \times 10^{-6}$ mm/mm/K) Consequently the invention provides PVC profiles, with a coefficient of linear thermal expansion preferably lower than $25 \times 10^{-6}$ mm/mm/K, more preferably lower than $20 \times 10^{-6}$ mm/mm/K, most preferably lower than $15 \times 10^{-6}$ mm/mm/K.

In a preferred embodiment, a profile according to the invention is provided with hollow cavities. Profiles thus provided with chambers are light and easily transportable.

In a preferred embodiment, a profile is made with raw material obtained by means of two mixing steps; each mixing step involves the mixing of PVC with a naturally occurring mineral filler and a temperature treatment. The mixing steps that are taken into consideration are classical preparation steps, like compounding, granulating and extruding. More information about these preparations can be found in textbooks, like for example PVC Handbook, Eds. Charles E. Wilkes, James W. Summers, and Charles A. Daniels, published by Hanser Gardner, 2005. The advantage of this preparation is that the homogeneity of a formulation will be preserved, so that problems like segregation and loss of quality are reduced. Therefore, the invention provides profiles wherein the raw material for the profile is obtained by means of two mixing steps for mixing the PVC with the naturally occurring mineral filler. Preferably the naturally occurring mineral filler is talc and/or mica. More preferably the naturally occurring mineral filler is talc. Most preferably the naturally occurring mineral filler is talc with an average grain size between 0.5 and 40 μm.

In a preferred embodiment, a preparation includes a first mixing step a) where a pre-reinforced polymer is formed by mixing a quantity A of naturally occurring mineral filler with PVC at a temperature lower than the PVC melting temperature. Contrary to other substances, polyvinylchloride does not have one well-determined melting temperature but rather a melting range going from 130 °C to 240 °C. A **"temperature lower than the melting temperature"** of a polyvinylchloride polymer, means a temperature lower than 130 °C.

During a second mixing step b), the pre-reinforced polymer obtained in step a) is mixed with a quantity B of a naturally occurring mineral filler at a temperature higher than 180 °C. The temperature higher than 180 °C should preferably be 185 °C, more preferably 190 °C, even more preferably 195 °C, most preferably 200 °C. In a preferred embodiment according to the invention, a PVC profile is obtained by extruding in step b), at a temperature of preferably 185 °C, more preferably of 190 °C, even more preferably of 195 °C and most preferably of 200 °C. The filler used in step a) can differ from the one applied in step b). The advantage of this preparation is that the quantity of filler in a formulation can be increased without compromising the workability. The resulting profiles are of good quality. For example, the profiles show a smooth and homogeneous surface, without parts of filler protruding on the surface. Therefore, the invention provides profiles having the characteristic that during their preparation, in the first mixing phase a quantity A of the naturally occurring mineral filler is mixed with PVC at a temperature lower than the PVC melting temperature; and that during the second mixing phase a quantity B of the naturally occurring mineral filler is mixed with the first mixture, at a temperature higher than 180°C.

In a preferred embodiment, a method for obtaining a profile according to the invention comprises the steps of:

a) preparation of a pre-reinforced polymer by mixing polyvinyl chloride polymer with a quantity A of a naturally occurring mineral filler at a temperature lower than the melting temperature of the polyvinyl chloride polymer,
b) mixing the pre-reinforced polymer obtained under a) with a quantity B of a naturally occurring mineral filler at a temperature higher than 180°C to obtain a reinforced polyvinyl chloride polymer,
c) optionally granulating the reinforced polyvinyl chloride polymer obtained in step b),
d) pressing the reinforced polymer obtained in step b) or the granulate obtained in step c) through a die to obtain said profile.

In a preferred embodiment the quantity A of a naturally occurring mineral filler used in a method to obtain a profile according to the invention is between 0-2 phr, between 2-25 phr, or between 25-40 per hundred parts of polyvinyl chloride polymer (phr). In a production environment where the processing equipment is in close proximity of the mixer, a quantity A between 25-40 phr is advantageous, since there is little transport and thus little risk for segregation. For situations with an average requirement for transportation, a quantity A between 2-25 phr is advantageous. With excellent feeders, the quantity A can be decreased to between 0-2 phr. In a preferred embodiment, a highly filled compound is formed by using at least 25 weight parts of naturally occurring mineral filler, during the first step.

The ratio of a quantity A of a filler to a quantity B of a filler is at least 0.1, preferably at least 0.2, more preferably at least 0.25, most preferably at least 0.3. If this ratio is used when preparing the feed for the extruder, then this will show an almost optimal flow and compressibility. This is unexpected, since it is known that it is hard for highly filled compositions to flow through the feed throat into a cylinder of an extruder and that they do not flow fast enough to fill the first screw flights. This leads to inefficient mixing and a bad quality of the final product. It is also known that a highly filled composition has a very high compressibility. Consequently, the screw of an extruder can compress the filler only to a limited extent, which is insufficient to prompt the required friction needed for the material to melt. Because of this, a powder or only a sintered product comes out of the extruder, instead of a proper melt. Therefore, the invention provides PVC profiles, with the characteristic that the ratio of A over B is at least 0.1 , preferably at least 0.2, more preferably at least 0.25, most preferably 0.3. In a preferred embodiment, the ratio of A over B in a method for the preparation of a profile according to the invention is at least 0.1, preferably at least 0.2, more preferably at least 0.25, most preferably at least 0.3.

In a preferred embodiment the total quantity of filler expressed in weight%, amounts up to 70 weight % of the reinforced polyvinyl chloride polymer. The deployability of larger quantities of filler offers more possibilities for giving direction to the characteristics of the product, for example the reduction of the coefficient of linear thermal expansion or the increase of the flexural modulus.

In a preferred embodiment, the total number of filler parts (A+B) with regards to the number of polyvinyl chloride polymer parts, is preferably between 0.4 and 2.5, more preferably between 0.6 and 1.5, most preferably between 0.8 and 1.2. In a preferred embodiment, the total quantity of naturally occurring mineral filler (A+B) with regards to the quantity of polyvinyl chloride polymer is preferably between 0.4 (about 30 weight% naturally occurring mineral filler / 70 weight% PVC) and 2.5 (about 70 weight% naturally occurring mineral filler / 30 weight% PVC), more preferably between 0.6 and 1.5, most preferably between 0.8 and 1.2. The advantage of this proportion is that there will be enough polymer in relation to the filler, to achieve complete melting and mixing in an extruder, the consequence of which will be a homogeneous mixture.

In a preferred embodiment the total quantity of naturally occurring mineral filler (A+B) to the quantity of polyvinyl chloride polymer in a method for the preparation of a profile according to the invention, is preferably between 0.4 and 2.5, more preferably between 0.6 and 1.5, most preferably between 0.8 and 1.2.

In a preferred embodiment, a PVC profile contains at least one additive, selected from a group comprising heat stabilizers, lubricants, processing aids, toughening agents, foaming agents, light stabilizers and colouring agents. In a preferred embodiment according to the invention, a formulation comprises a heat stabilizer, a lubricant and a processing aid and requires no further additives.

In a preferred embodiment, a heat stabilizer is selected from a group of stabilizers of the CaZn, Ca-organic, Sn, or Pb type. The CaZn types are calcium-zinc systems based on calcium and zinc salts of fatty acids in combination with costabilizers. The Ca-organic types are stabilizers based on the calcium salt of fatty acids in combination with costabilizers. Sn types are stabilizers based on organic stannous compounds. The Pb types are stabilizers based on (in)organic lead salts. A heat stabilizer ensures the delay of the dehydrochlorination process of polyvinyl chloride and it prevents the polyvinyl chloride from burning during a thermal treatment, like an extrusion. For applications in Europe there is a preference for CaZn and Ca-organic stabilizers, whereas for applications in North America Sn stabilizers are preferred. The reasons for this are historic. North America has always preferred Sn stabilizers, whereas Europe has always preferred Pb stabilizers. Since Pb stabilizers will disappear (at the latest in 2015) the preference in Europe goes to CaZn and Ca-organic.

In another preferred embodiment, a heat stabilizer is of the blocked thiol type. By the term **"blocked thiol"** it is meant a thiol of formula B-S-R wherein B and R represent an organic portion. Blocked thiol and organic-based heat stabilizer are used interchangeably. An organic-based heat stabilizer comprises a zinc salt, and at least one sulphur compound selected from the group consisting of a free mercaptan, a zinc mercaptide, and a latent mercaptan. Preferably the organic-based heat stabilizer is an organic-based composition comprising at least one organic-based heat stabilizer component, and at least one stabilizer modifying component selected from the group consisting of liquid calcium soap and 1,3,5-tris (2-hydroxyethyl) cyanuric acid; wherein the organic-based heat stabilizer component comprises a zinc salt and at least one sulfur compound selected from the group consisting of a free mercaptan, a zinc mercaptide, and a latent mercaptan; and wherein the liquid calcium salt is a solution of a calcium salt which is liquid at 105 °C and is free from other metal salts.

Use of a blocked thiol type stabilizer system is advantageous as it is essentially free of heavy metals and harmful bisphenol A co-stabilizer. It is an environmentally friendly type of stabilizer. A further advantage is that this type of stabilizer boosts recyclability. PVC stabilized with a blocked thiol type heat stabilizer is compatible with other stabilizing systems such as the CaZn, Ca-organic, Sn, or Pb type stabilizers. It can be safely combined with recycled PVC. It provides good colour stability in PVC profiles. In an embodiment of the invention, a profile comprises an organic based thermal stabilizer. In a further embodiment of the invention, a profile comprising up to 10 weight%, preferably up to 25 weight % recycled PVC, comprises a blocked thiol type stabilizer.

In a preferred embodiment, the total quantity of stabilizers in a formulation is between 1 and 4 weight%, more preferably between 2 and 4 weight%, most preferably between 3 and 4 weight%. In a more preferred embodiment of the invention, the total quantity of stabilizers in a formulation is maximum 1.5 weight% in case Sn type stabilizers are used, 5 weight% when Pb type stabilizers are used, 2-4 weight% when using CaZn or Ca-organic type stabilizers, 4 weight% when a blocked thiol type is used.

In a preferred embodiment, a method for obtaining a profile according to the invention further comprises the step of adding a thermal stabilizer in a quantity of between 0 and 5 weight%; preferably between 1 and 4 weight%; most preferably around 4 weight%, wherein said thermal stabilizer is preferably a blocked thiol type stabilizer.

An additive can also be a lubricant, for example to improve the flow of the polymer melt in the extruder. In a preferred embodiment, a lubricant is selected from a group comprising polyethylene waxes, oxidized polyethylene waxes, paraffin waxes, fatty acid ester waxes (for example distearyl phthalate), fatty acids salts (for example calcium stearate), fatty acids, fatty acids alcohols, amine waxes and/or their combinations. In a preferred embodiment, the total quantity of lubricants in a formulation is between 0 and 2 weight%, more preferably between 1 and 2 weight%, most preferably between 1.5 and 2 weight%.

In a preferred embodiment, a processing aid is selected from a group comprising methacrylate copolymers, acrylate copolymers, methacrylate terpolymers, acrylate terpolymers and/or a combination thereof. In a preferred embodiment, the total quantity of processing aid in a formulation is between 0 and 15 weight%, more preferably between 5 and 15 weight%, most preferably between 10 and 15 weight%. This use supports, for example, the processability of a polymer by promoting fusion, improving melting strength, changing the surface characteristics, ensuring an improved release of a melt from metal parts.

In a preferred embodiment a method for obtaining a profile according to the invention further comprises the step of adding a processing aid in a quantity of between 0 and 15 weight%; preferably between 5 and 15 weight%.

In order to improve the impact resistance of a PVC profile, a toughening agent can be added. In a preferred embodiment, the total quantity of toughening agents in a formulation is between 0 and 5 weight%, more preferably between 1 and 5 weight%, most preferably between 2 and 5 weight %.

A light stabilizer can be added in order to slow down the PVC degradation due to exposure to light. In a preferred embodiment, a light stabilizer is selected from a group comprising a stabilizer of the titanium dioxide type, of the benzotriazole type, or of the 2-hydroxybenzophenone type and/or combinations thereof. Titanium dioxide is used in a more preferred embodiment according to the invention. In the most preferred embodiment, the total quantity of light stabilizers in a formulation is preferably between 0 and 10 weight%, more preferably between 8 and 4 weight%, most preferably between 4 and 6 weight%.

A profile according to the invention can be fit with a covering layer or cap. The material for the cap layer is selected from a group comprising poly((meth))acrylate), poly(butyl acrylatestyrene- acrylonitrile), polyvinylidene fluoride, polyvinyl fluoride, poly(styrene-acrylonitrile), a light proof polyvinyl chloride material and/or a combination thereof. In a preferred embodiment according to the invention, the total quantity of additive for the covering layer in a formulation is preferably between 0 and 6 weight%, more preferably between 0 and 4 weight%, most preferably between 0 and 2 weight%.

If the final application becomes a visible part, so if no cap is extruded over a PVC profile, then a PVC profile can be coloured with a colouring agent. In a preferred embodiment, a colouring agent will be selected from among a group comprising metal salt, metal oxide, mixed-metal oxide and/or combinations thereof. In a more preferred embodiment, a mixed-metal oxide is used. This shows the most favourable ageing behaviour. In a preferred embodiment, the total quantity of colouring agents in a formulation is between 0 and 5 weight%, more preferably between 1 and 4 weight%, most preferably between 2 and 3 weight%.

The present specification describes a reinforced polyvinylchloride polymer based on a formulation comprising:

- polyvinylchloride polymer in a quantity preferably between 30 and 70 weight%, more preferably between 35 and 70 weight%, most preferably between 40 and 70 weight% of the formulation;
- filler in a quantity preferably between 30 and 70 weight%, more preferably between 35 and 70 weight%, most preferably between 40 and 70 weight% of the formulation.

In an embodiment described herein, a reinforced polyvinylchloride polymer is based on a formulation comprising:

- polyvinylchloride polymer in a quantity of at least 30 weight%, preferably at least 35 weight%, more preferably at least 40 weight%, most preferably at least 45 weight% of the formulation; and
- a naturally occurring mineral filler in a quantity of at least 30 weight%, preferably at least 35 weight%, more preferably at least 40 weight%, most preferably at least 45 weight% of the formulation.

In an embodiment descibed herein, a reinforced polyvinylchloride polymer is based on a formulation comprising:

- polyvinylchloride polymer in a quantity of at least 30 weight%, preferably at least 35 weight%, more preferably at least 40 weight%, most preferably at least 45 weight% of the formulation; and
- a naturally occurring mineral filler in a quantity of at least 30 weight%, preferably at least 35 weight%, more preferably at least 40 weight%, most preferably at least 45 weight% of the formulation; whereby said filler is talc and/or mica, preferably talc.

A polyvinyl chloride polymer based on a formulation according to a preferred embodiment as described herein has increased filler contents. This highly filled polyvinylchloride polymers are more reinforced, have increased fire resistant characteristics, increased rigidity and increased stiffness.

In a further aspect, the invention provides a granulate or profile obtained according to a method as previously described. Another further aspect of the invention discusses the uses of the PVC profiles.

According to an embodiment of the invention, profiles are preferably used as reinforcing elements. Reinforcing elements are applied as a reinforcement for PVC profiles having large dimensions, for example (sliding) windows, doors, gates, fences or other railings. Typically, steel and aluminium reinforcement elements are used for this. A reinforcement element according to an embodiment of the invention can be a profile, one or more strips or co-extrudate. In the first case, in order to produce a strengthened PVC profile, a traditional PVC profile is made with a chamber and a reinforced polyvinyl chloride reinforcement element. The reinforcement element is slid into the chamber. It can be attached, for example, with screws and/or glue. The reinforcement element can be integrated in a PVC profile during the production of a PVC profile, preferably by means of a (co)extrusion. In doing so, a part of the profile will consist in a profile according to the invention, for example through a (co)extrusion. A (co)extrudate can take the shape of one or more strips. The use of a reinforcement element according to the invention as a replacement of a metal reinforcement element has the advantage of providing an improved insulation value. A conductive material, like a metal, is after all replaced with a much less conductive material. This can be important in windows or other building materials, in order to be able to comply with stricter insulation norms. The use of a PVC reinforcement element also has the advantage that a lighter construction is obtained without a reduction of the strength. This allows an easier manipulation and installation. Therefore, the invention provides a use of a profile according to a preferred embodiment as a reinforcement element, preferably in window frames or fencing.

PVC profiles according to a preferred embodiment of the invention are applied for decking floors. It is a sturdy, light and well insulating material. PVC profiles according to a preferred embodiment of the invention are recyclable.

PVC profiles according to a preferred embodiment of the invention have a good workability. They can be shaped with standard carpenter tools like a saw or a drill. They can be nailed or attached without cracking or splintering the profile. Screws can be driven into the profiles of the invention. A profile according to a preferred embodiment of the invention can serve as a basis for suspended structures and closures (fittings). Therefore the invention provides use of a profile according to a preferred embodiment wherein the reinforcement element is used as basis for a suspended structure or closure such as a fitting. In another preferred embodiment the invention provides the use of a profile of the invention, wherein said profile is fastened with nails or screws.

It is obvious that the description of this invention can be related to alternative embodiments within its scope. The invention is illustrated based on the following non-limiting examples.

PVC Profiles

Examples 1-8

Profiles according to a preferred embodiment of the invention, can be based on compositions like those represented in Table 1 , under Example 1-7. The term **"phr"**, the way it is used in this invention, means **"parts per hundred resins"**. Upon using this unit, 100 parts of polyvinyl chloride polymer are adopted, and the quantity of other ingredients is expressed in relation to this 100 parts of polyvinyl chloride polymer.

To produce a batch quantity of 100 kg, the following quantities were put in a hot-mixer, of the Periplast brand, having a volume of 150 litres: 100 parts of polyvinyl chloride polymer, 3.5 parts of CaZn stabilizer or 1.5 parts of Sn stabilizer or **4**.0 parts of blocked thiol type stabilizer, 1.9 parts of lubricants, 8 or 10 parts of processing aid, 5 or 6 parts of toughening agent and 25 parts of talc. The ingredients were mixed by means of a stirrer with a blade tip speed of 38 m/s. The mantle temperature was 80 °C. Upon reaching the temperature of 120 °C, the mixture was discharged into a cold-mixer of the Periplast brand, with a volume of 800 litres. The mixture was stirred with a blade tip speed of 6 m/s. In order to cool the mixture, the wall temperature was set at 10 °C with cooling fluid. The mixture was cooled down until a discharge temperature of 40 °C was reached.

Table 1 : Compositions for producing PVC profiles according to the invention (Examples 1-7) and according to prior art (Example 8)

| Example | 1 | 2 | 3 | 4 |
|---|---|---|---|---|
| *Formulation* | (phr) | (phr) | (phr) | (phr) |
| PVC K-value 65 | 100 | 100 | 100 | 100 |
| CaZn stabilizer | 3.5 | 3.5 | 3.5 | 3.5 |
| Sn stabilizer | | | | |
| Lubricant | 1.9 | 1.9 | 1.9 | 1.9 |
| Processing aid | 8 | 8 | 8 | 8 |
| Toughening agent | 6 | 6 | 6 | 6 |
| Talc (d50 = 1.9 µm) | 25 + 85 (*) | | 25 + 75 (*) | |
| Mica (d50 = 33 µm) | | 25 + 75 (*) | | 25 + 75 (*) |

(*)        25 phr added in the hot-mixer, + x parts added on the extruder

| Example | 5 | 6 | 7 | 8 |
|---|---|---|---|---|
| *Formulation* | (phr) | (phr) | (phr) | (phr) |
| PVC K-value 65 | 100 | 100 | 100 | 100 |
| CaZn stabilizer | | | | |
| Sn stabilizer | 1.5 | 1.5 | | 1 |
| Blocked thiol type stabilizer | | | 4.0 | |
| Lubricant | 1.9 | 1.9 | 1.9 | 1.9 |
| Processing aid | 10 | 10 | 8 | 10 |
| Toughening agent | 5 | 5 | 6 | 5 |
| Talc (d50 = 1.9 µm) | 25 + 75 (*) | | 25 + 75 (*) | |
| Mica (d50 = 33 µm) | | 25 + 75 (*) | | |
| Glass fibre | | | | 25 + 75 (*) |

(*)        25 phr added in the hot-mixer, + x parts added on the extruder

Examples 9-1 1

The pre-reinforced polymer obtained in this way, was brought into a dosing unit of a counter-rotating parallel double-screw extruder of the Bandera brand and was processed into granules or was directly transformed into a profile with the assistance of a shaping die.

A typical method for granulation is reproduced in Table 2. In total 100 phr of naturally occurring mineral filler were used; 25 phr in the first method step (described above) and 75 phr in the second step. Product streams were led to a reciprocating single-screw extruder of the Buss PR-46 brand, with a throughput of 26 and 14 kg per hour respectively, from a first dosing unit filled with a compound comprising 25 phr of naturally occurring mineral filler and a second dosing unit filled with naturally occurring mineral filler. Each product stream was brought onto the screw of the extruder through a separate feed throat. The kneader and the extruder were operated with the settings represented in Table 2.

Table 2: Example of a typical granulation method

| | Example 9 |
|---|---|
| Type | Reciprocating single-screw extruder |
| Brand | Buss PR-46 |
| *Dosing unit* | |
| Dosing unit 1 (compound) | 26 kg/h |
| Dosing unit 2 (naturally occurring mineral filler ) | 14 kg/h |

(continued)

| | Example 9 |
|---|---|
| Naturally occurring mineral filler quantity in compound | 25 phr |
| Additionally dosed naturally occurring mineral filler | 75 phr |
| Dose method | Each stream through a separate feed throat |
| *Kneader* | |
| Screw diameter | 46 mm |
| Screw length | 11D (*) |
| Temperature kneader zone 1 | 190 °C |
| Temperature kneader zone 2 | 190 °C |
| Screw temperature | 130 °C |
| Screw speed | 216 rpm |
| *Extruder* | |
| Screw diameter | 70 mm |
| Screw length | 6D (*) |
| Cylinder temperature | 190 °C |
| Screw temperature | 130 °C |
| Screw speed | 33 rpm |
| Temperature granulation die | 200 °C |
| Throughput | 40 kg/h |
| (*) 11D = 11 x screw diameter, 6D = 6x screw diameter, rpm= rotations per minute | |

A typical example of a profile extrusion from granules (example 10) and a direct profile extrusion (example 11) are presented in Table 3.

Table 3: A typical example of a profile extrusion from granulate and a direct profile extrusion.

| | Example 10 | Example 11 |
|---|---|---|
| Type | Counter-rotating parallel double-screw extruder | Counter-rotating parallel double-screw extruder |
| Brand | Bandera | Bandera |
| *Dosing unit* | | |
| Dosing unit 1 | 98 kg/h (granulate) | 58 kg/h (compound) |
| Dosing unit 2 (filler) | - | 30 kg/h |
| Filler quantity in compound | | 25 phr |
| Additionally dosed filler | | 75 phr |
| Dose method | | Both flows through the same feed throat |
| *Extruder* | | |
| Screw diameter | 66 mm | 66 mm |
| Screw length | 20D (*) | 20D (*) |
| Cylinder temperature zone 1 | 185 °C | 185 °C |

(continued)

|  | Example 10 | Example 11 |
|---|---|---|
| Cylinder temperature zone 2 | 190 °C | 190 °C |
| Cylinder temperature zone 3 | 190 °C | 190 °C |
| Cylinder temperature zone 4 | 190 °C | 190 °C |
| Cylinder temperature zone 5 | 195 °C | 195 °C |
| Temperature adapter zone 1 | 185 °C | 185 °C |
| Temperature adapter zone 2 | 190 °C | 190 °C |
| Temperature die zone 1 | 200 °C | 200 °C |
|  |  |  |
| Temperature die zone 2 | 200 °C | 200 °C |
| Temperature die zone 3 | 200 °C | 200 °C |
| Temperature die zone 4 | 200 °C | 200 °C |
| Screw temperature | 140 °C | 140 °C |
| Screw speed | 18 rpm | 18 rpm |
| Vacuum degassing | Yes | Yes |
| Yield | 98 kg/h | 88 kg/h |
| (*) 20D = 20x screw diameter, rpm = rotations per minute | | |

Example 12

As a further example, the inventors prepared a formulation as described by Example 12. To produce a batch quantity of 100 kg, the ingredients and quantities as illustrated by Table 4 were used. The quantities used are expressed in weight percentages of the formulation.

The polyvinylchloride resin with K-value of 65, titanium dioxide, tin-based stabiliser, lubricants and processing aids were loaded into a hot-mixer at room temperature. These ingredients were mixed by means of a stirrer with a blade tip speed of 38 m/s. Upon reaching 80 °C in the mixture a first amount A of talc was added to the hot-mixer and mixing continued. Upon reaching a temperature of 120 °C, the mixture was transferred to a cold-mixer. The mixture was stirred with a blade tip speed of 6 m/s. In order to cool down the mixture, the mantle temperature of the cold-mixer was set at 15 °C. The mixture was cooled until the mixture reached a temperature of 40 °C.

The compound thus obtained was transported by means of a transportation conduit to a mixing station (hopper + feeder). In the mixing station a first hopper was loaded with the compound. A second hopper of the mixing station was loaded with PVC window profile scrap. The amount of scrap PVC as indicated in Table 3 was mixed with the compound in the mixing station. From the mixing station the mixture thus obtained was transported by means of a conduit to the main hopper of a granulation extruder. The extruder used was a counter-rotating parallel double- screw extruder of the Krauss-Maffei KMD90 type.

Table 4: Composition for producing PVC profiles (Example 12)

| Example | 12 |
|---|---|
| *Formulation* | weight% |
|  |  |

(continued)

| Example | 12 |
|---|---|
| *Formulation* | weight% |
| PVC, K-value 65 | 36.4 |
| PVC window profile scrap | 11.7 |
| Talc (amount A) | 3.6 |
| Talc (amount B) | 41.7 |
| Additives | 6.6 |

The main hopper comprised a hopper and feeder. The feeder was connected to an inlet on the extruder. The mixture was loaded in the hopper. Through the hopper and feeder the material flowed to the inlet of the extruder and onto the screws of the granulation extruder. A second amount B of talc, as indicated in Table 4, was fed to a second dosing installation which also comprised a hopper and feeder and connected to an inlet on the extruder. Both material flows met on the screws of the extruder. The conditions used for the granulation extruder were as listed in Table 5.

On the screws of the granulation extruder the compound was heated above the melting temperature of the PVC. The material melted and an intensive mixing took place. The granulation extruder was equipped with a die. The melt flow was guided through the die. Upon leaving the die thin strands were formed with a diameter of about 3 mm. The strings were cut with a rotating knife to obtain pieces with a length of about 1 to 3 mm. The granulate obtained was blown to a drying and cooling tower, cooled down and poured into big bags or a storage tank. This granulate was fit for further use.

Table 5: Operational conditions used in the granulation extruder for the preparation of granulate based on the compound as exemplified by Example 10.

| Zone | Temperature (°C) |
|---|---|
| Cylinder zone 1 | 160 |
| Cylinder zone 2 | 185 |
| Cylinder zone 3 | 185 |
| Cylinder zone 4 | 182 |
| Cylinder zone 5 | 177 |
| Cylinder zone 6 | 171 |
| Adapter zone 1 | 174 |
| Adapter zone 2 | 171 |
| Adapter zone zone 3 | 171 |
| | |
| Die 1 | 177 |

The granulate obtained was transported to a profile extruder. The extruder used is a counter-rotating conical double-screw extruder of the Krauss-Maffei KMD60 type. The granulate was loaded in the dosing station of the extruder. The dosing station was connected to an inlet of the extruder. From this dosing station the granulate flows onto the screws of the extruder. On the screws the granulate was heated up, melted and transported to a die. The conditions used in the extruder for the preparation of the profile were as listed in Table 6.

Table 6: Operational conditions used in the extruder for the preparation of a profile based on the compound as exemplified by Example 12.

| Zone | Temperature (°C) |
|---|---|
| Cylinder zone 1 | 168 |

(continued)

| Zone | Temperature (°C) |
|---|---|
| Cylinder zone 2 | 171 |
| Cylinder zone 3 | 174 |
| Cylinder zone 4 | 177 |
| Adapter zone 1 | 182 |
| Die 1 | 188 |
| Die 2 | 188 |
| Die 3 | 188 |
| Die 4 | 188 |

The die that was used had the shape and size of the desired profile. The melt is pushed through the die and took the shape as dictated by the die. This melt was transported to a calibration unit and cooling installation, where the melt was brought to its exact dimensions and cooled.

The reinforcing profile obtained was cut to a desired length to obtain reinforcement elements. The reinforcement elements were brought into a chamber of a window profile. The reinforced window profiles thus obtained were assembled, according to techniques known in the art, to window frames.

Characteristics of PVC profiles

Characteristics of PVC profiles based on a composition of Table 1 and according to a working method of Table 3 are represented in Table 7. The results obtained by using naturally occurring mineral filler (examples 1-7) can be compared with the results obtained with glass fibre (example 8). As a comparison, a PVC without reinforcing filler has a flexural modulus of 2.7 GPa and a CLTE of $52 \times 10^{-6}$ mm/mmK.

Table 7: Characteristics of PVC profiles according to the invention (Examples 1-7 and 11) and according to the prior art (Example 8)

| Example (No.) | 1 | 2 | 3 | 4 | 5 | 6 | 7 | 8 | 11 |
|---|---|---|---|---|---|---|---|---|---|
| Flexural modulus (GPa) | 13.9 | 15.7 | 10.8 | 15.7 | 10.8 | 15.7 | 10.8 | 15.0 | 12.5 |
| CLTE_(x $10^{-6}$ mm/mm/K) | 8 | 19 | 10 | 19 | 10 | 19 | 10 | 47 | 9 |

**Claims**

1. A granulate or profile made of a reinforced polyvinyl chloride polymer comprising at least 40 weight parts, preferably at least 60 weight parts, most preferably at least 80 weight parts of naturally occurring mineral filler for every 100 weight parts of polyvinyl chloride (PVC), and PVC with a K-value of 50-68, **characterized in that** said granulate or profile has a flexural modulus of at least 5 GPa, preferably at least 8 GPa, more preferably at least 10 GPa, wherein the naturally occurring mineral filler is selected from a group including wollastonite, vermiculite, talc, mica, and/or combinations thereof.

2. The granulate or profile according to claim 1, wherein the naturally occurring mineral filler is talc and/or mica.

3. The granulate or profile according to claims 1 or 2, wherein the reinforced polyvinyl chloride polymer composition is substantially free of natural and mineral fibres.

4. The granulate or profile according to any of claims 1 to 3, wherein the naturally occurring mineral filler comprises mica, and wherein the flexural modulus is at least 15 GPa.

5. The granulate or profile according to any of claims 1 to 3, wherein the naturally occurring mineral filler comprises talc, and wherein the flexural modulus is at least 10.8 GPa.

6. The granulate or profile made of a reinforced polyvinyl chloride polymer according to any of claims 1 to 5, with a K-value between 64 and 68.

7. The granulate or profile according to any of claims 1 to 6, wherein the naturally occurring mineral filler has an average grain size between 0.5 and 50 $\mu$m; said talc preferably has an average grain size d50 between 0.5 and 5 $\mu$m and said mica has an average grain size d50 between 30 and 35 $\mu$m.

8. The granulate or profile according to any of claims 1-5, with a coefficient of linear thermal expansion (CLTE) lower than $25 \times 10^{-6}$ mm/mm/K, preferably lower than $20 \times 10^{-6}$ mm/mm/K, more preferably lower than $15 \times 10^{-6}$ mm/mm/K.

9. The granulate or profile according to any of claims 1 to 8, wherein said profile is provided with hollow cavities.

10. the granulate or profile according to any of claims 1 to 9, wherein said natural filler is talc.

11. Method for obtaining a granulate or profile comprising at least 40 weight parts of naturally occurring mineral filler for every 100 weight parts of polyvinyl chloride (PVC), and PVC with a K-value of 50-68, **characterized in that** said granulate or profile has a flexural modulus of at least 5 GPa, comprising the steps of:

a) preparation of a pre-reinforced polymer by mixing polyvinyl chloride polymer with a quantity A of a naturally occurring mineral filler at a temperature lower than the melting temperature of the polyvinyl chloride polymer,
b) mixing the pre-reinforced polymer obtained under a) with a quantity B of a naturally occurring mineral filler at a temperature higher than 180°C to obtain a reinforced polyvinyl chloride polymer,
c) optionally granulating the reinforced polyvinyl chloride polymer obtained in step b),
d) pressing the reinforced polymer obtained in step b) or the granulate obtained in step c) through a die to obtain said granulate or profile.

12. Method according to claim 11, **characterized in that** said quantity A is between 2 and 40 parts per hundred parts of the polyvinyl chloride polymer (phr).

13. Method according to claims 11 or 12, **characterized in that** the weight ratio of quantity A over quantity B is at least 0.1, preferably at least 0.2, more preferably at least 0.25, most preferably at least 0.3.

14. Method according to any of claims 11 to 13, **characterized in that** the total weight of naturally occurring mineral filler (A+B) to the weight of polyvinyl chloride polymer, is preferably between 0.4 and 2.5, more preferably between 0.6 and 1.5, most preferably between 0.8 and 1.2.

15. Method according to any of claims 11 to 14, further comprising the step of adding a processing aid in a quantity of between 0 and 15 weight%; preferably between 5 and 15 weight%.

16. Method according to any of claims 11 to 15, further comprising the step of adding a thermal stabilizer in a quantity of between 0 and 5 weight%; preferably between 1 and 4 weight%; most preferably around 4 weight%, wherein said thermal stabilizer is preferably a blocked thiol type stabilizer.

17. Granulate obtained in step c) of the method according to any of claims 11 to 16.

18. Use of a granulate or profile according to any of the above claims 1 to 10 as a reinforcement element, preferably in a window-frame or fencing.

19. Use of a granulate or profile according to claim 18, wherein said reinforcement element is used as basis for a suspended structure or closure such as a fitting.

20. Use of a granulate or profile according to any of the above claims 1 to 10, wherein said profile is fastened with nails or screws.

**Patentansprüche**

1. Granulat oder Profil, bestehend aus einem verstärkten Polyvinylchloridpolymer, das wenigstens 40 Gewichtsteile, vorzugsweise wenigstens 60 Gewichtsteile, höchst bevorzugt wenigstens 80 Gewichtsteile, an natürlich vorkommendem mineralischem Füllstoff auf 100 Gewichtsteile Polyvinylchlorid (PVC) und PVC mit einem K-Wert von 50-68 umfasst, **dadurch gekennzeichnet, dass** das Granulat oder Profil einen Biegemodul von wenigstens 5 GPa aufweist, vorzugsweise wenigstens 8 GPa, bevorzugter wenigstens 10 GPa, wobei der natürlich vorkommende mineralische Füllstoff ausgewählt ist aus der Gruppe umfassend Wollastonit, Vermiculit, Talkum, Glimmer und/oder Kombinationen davon.

2. Granulat oder Profil gemäß Anspruch 1, wobei der natürlich vorkommende mineralische Füllstoff Talkum und/oder Glimmer ist.

3. Granulat oder Profil gemäß Ansprüchen 1 oder 2, wobei die verstärkte Polyvinylchloridpolymer-Zusammensetzung im Wesentlichen frei von natürlichen und mineralischen Fasern ist.

4. Granulat oder Profil gemäß einem der Ansprüche 1 bis 3, wobei der natürlich vorkommende mineralische Füllstoff Glimmer umfasst und wobei der Biegemodul wenigstens 15 GPa beträgt.

5. Granulat oder Profil gemäß einem der Ansprüche 1 bis 3, wobei der natürlich vorkommende mineralische Füllstoff Talkum umfasst und wobei der Biegemodul wenigstens 10,8 GPa beträgt.

6. Granulat oder Profil, bestehend aus einem verstärkten Polyvinylchloridpolymer gemäß einem der Ansprüche 1 bis 5 mit einem K-Wert zwischen 64 und 68.

7. Granulat oder Profil gemäß einem der Ansprüche 1 bis 6, wobei der natürlich vorkommende mineralische Füllstoff eine mittlere Korngröße zwischen 0,5 und 50 $\mu$m aufweist; das Talkum vorzugsweise eine mittlere Korngröße d50 zwischen 0,5 und 5 $\mu$m aufweist und der Glimmer eine mittlere Korngröße d50 zwischen 30 und 35 $\mu$m aufweist.

8. Granulat oder Profil gemäß einem der Ansprüche 1-5 mit einem linearen Wärmeausdehnungskoeffizienten (CLTE) von kleiner als 25 x $10^{-6}$ mm/mm/K, vorzugsweise kleiner als 20 x $10^{-6}$ mm/mm/K, bevorzugter kleiner als 15 x $10^{-6}$ mm/mm/K.

9. Granulat oder Profil gemäß einem der Ansprüche 1 bis 8, wobei das Profil mit hohlen Aussparungen versehen ist.

10. Granulat oder Profil gemäß einem der Ansprüche 1 bis 9, wobei der natürliche Füllstoff Talkum ist.

11. Verfahren zum Herstellen eines Granulats oder Profils, das wenigstens 40 Gewichtsteile an natürlich vorkommendem mineralischem Füllstoff auf 100 Gewichtsteile Polyvinylchlorid (PVC) und PVC mit einem K-Wert von 50-68 umfasst, **dadurch gekennzeichnet, dass** das Granulat oder Profil einen Biegemodul von wenigstens 5 GPa aufweist, umfassend die Schritte:

    a) Herstellen eines vorverstärkten Polymers durch Mischen von Polyvinylchloridpolymer mit einer Menge A eines natürlich vorkommenden mineralischen Füllstoffs bei einer Temperatur unter der Schmelztemperatur des Polyvinylchloridpolymers,
    b) Mischen des bei a) erhaltenen vorverstärkten Polymers mit einer mit einer Menge B eines natürlich vorkommenden mineralischen Füllstoffs bei einer Temperatur von höher als 180 °C, um ein verstärktes Polyvinylchloridpolymer zu erhalten,
    c) gegebenenfalls Granulieren des bei Schritt b) erhaltenen verstärkten Polyvinylchloridpolymers,
    d) Pressen des bei Schritt b) erhaltenen verstärkten Polymers oder des bei Schritt c) erhaltenen Granulats durch eine Pressform, um das Granulat oder Profil zu erhalten.

12. Verfahren gemäß Anspruch 11, **dadurch gekennzeichnet, dass** die Menge A zwischen 2 und 40 Teile pro einhundert Teile des Polyvinylchloridpolymers (phr) beträgt.

**13.** Verfahren gemäß Ansprüchen 11 oder 12, **dadurch gekennzeichnet, dass** das Gewichtsverhältnis von Menge A zu Menge B wenigstens 0,1 beträgt, vorzugsweise wenigstens 0,2, bevorzugter wenigstens 0,25, höchst bevorzugt wenigstens 0,3.

**14.** Verfahren gemäß einem der Ansprüche 11 bis 13, **dadurch gekennzeichnet, dass** das Gesamtgewicht an natürlich vorkommendem mineralischem Füllstoff (A + B) bezogen auf das Gewicht an Polyvinylchloridpolymer vorzugsweise zwischen 0,4 und 2,5 beträgt, bevorzugter zwischen 0,6 und 1,5, höchst bevorzugt zwischen 0,8 und 1,2.

**15.** Verfahren gemäß einem der Ansprüche 11 bis 14, ferner umfassend den Schritt des Zugebens eines Verarbeitungshilfsmittels in einer Menge zwischen 0 und 15 Gew.-%; vorzugsweise zwischen 5 und 15 Gew.-%.

**16.** Verfahren gemäß einem der Ansprüche 11 bis 15, ferner umfassend den Schritt des Zugebens eines Wärmestabilisators in einer Menge zwischen 0 und 5 Gew.-%; vorzugsweise zwischen 1 und 4 Gew.-%; höchst bevorzugt um 4 Gew.-%, wobei der Wärmestabilisator vorzugsweise ein Stabilisator vom blockiertes-Thiol-Typ ist.

**17.** Granulat, erhalten bei Schritt c) des Verfahrens gemäß einem der Ansprüche 11 bis 16.

**18.** Verwendung eines Granulats oder Profils gemäß einem der vorstehenden Ansprüche 1 bis 10 als Verstärkungselement, vorzugsweise in einem Fensterrahmen oder Zaun.

**19.** Verwendung eines Granulats oder Profils gemäß Anspruch 18, wobei das Verstärkungselement als Basis für eine eingehängte Struktur oder einen Verschluss, wie z. B. ein Formteil, verwendet wird.

**20.** Verwendung eines Granulats oder Profils gemäß einem der vorstehenden Ansprüche 1 bis 10, wobei das Profil mit Nägeln oder Schrauben befestigt wird.

**Revendications**

**1.** Granulé ou profilé constitué d'un polymère de polychlorure de vinyle renforcé comprenant au moins 40 parties en poids, préférablement au moins 60 parties en poids, idéalement au moins 80 parties en poids, d'une charge minérale présente à l'état naturel pour chaque 100 parties en poids de polychlorure de vinyle (PVC), et le PVC ayant une valeur K de 50 à 68, **caractérisé en ce que** ledit granulé ou profilé a un module de flexion d'au moins 5 GPa, préférablement d'au moins 8 GPa, plus préférablement d'au moins 10 GPa, la charge minérale présente à l'état naturel étant sélectionnée dans un groupe comprenant la wollastonite, la vermiculite, le talc, le mica, et/ou des combinaisons de ceux-ci.

**2.** Granulé ou profilé selon la revendication 1, dans lequel la charge minérale présente à l'état naturel est le talc et/ou le mica.

**3.** Granulé ou profilé selon les revendications 1 ou 2, dans lequel la composition du polymère de polychlorure de vinyle renforcé est essentiellement exempte de fibres naturelles et minérales.

**4.** Granulé ou profilé selon l'une quelconque des revendications 1 à 3, dans lequel la charge minérale présente à l'état naturel comprend du mica, et dans lequel le module de flexion est d'au moins 15 GPa.

**5.** Granulé ou profilé selon l'une quelconque des revendications 1 à 3, dans lequel la charge minérale présente à l'état naturel comprend du talc, et dans lequel le module de flexion est d'au moins 10,8 GPa.

**6.** Granulé ou profilé constitué d'un polymère de polychlorure de vinyle renforcé selon l'une quelconque des revendications 1 à 5, ayant une valeur K de 64 à 68.

**7.** Granulé ou profilé selon l'une quelconque des revendications 1 à 6, dans lequel la charge minérale présente à l'état naturel a une taille de grain moyenne de 0,5 à 50 μm, ledit talc a préférablement une taille de grain moyenne d50 de 0,5 à 5 μm, et ledit mica a une taille de grain moyenne d50 de 30 à 35 μm.

**8.** Granulé ou profilé selon l'une quelconque des revendications 1 à 5, ayant un coefficient de dilatation thermique linéaire (CDTL) inférieur à 25 x $10^{-6}$ mm/mm/K, préférablement inférieur à 20 x $10^{-6}$ mm/mm/K, plus préférablement inférieur à 15 x 10$^{-6}$ mm/mm/K.

9.  Granulé ou profilé selon l'une quelconque des revendications 1 à 8, ledit profilé étant pourvu de cavités creuses.

10. Granulé ou profilé selon l'une quelconque des revendications 1 à 9, ladite charge naturelle étant le talc.

11. Procédé permettant d'obtenir un granulé ou un profilé comprenant au moins 40 parties en poids d'une charge minérale présente à l'état naturel pour chaque 100 parties en poids de polychlorure de vinyle (PVC), et le PVC ayant une valeur K de 50 à 68, **caractérisé en ce que** ledit granulé ou profilé a un module de flexion d'au moins 5 GPa, comprenant les étapes qui consistent à :

> a) préparer un polymère pré-renforcé en mélangeant un polymère de polychlorure de vinyle avec une quantité A d'une charge minérale présente à l'état naturel, à une température inférieure à la température de fusion du polymère de polychlorure de vinyle,
> b) mélanger le polymère pré-renforcé obtenu à l'étape a) avec une quantité B d'une charge minérale présente à l'état naturel, à une température supérieure à 180 °C, pour obtenir un polymère de polychlorure de vinyle renforcé,
> c) optionnellement agglomérer en granulés le polymère de polychlorure de vinyle renforcé obtenu à l'étape b),
> d) presser le polymère renforcé obtenu à l'étape b) ou le granulé obtenu à l'étape c) en le faisant passer dans une filière pour obtenir ledit granulé ou profilé.

12. Procédé selon la revendication 11, **caractérisé en ce que** ladite quantité A est de 2 à 40 parties pour 100 parties du polymère de polychlorure de vinyle (phr).

13. Procédé selon les revendications 11 ou 12, **caractérisé en ce que** le rapport pondéral de la quantité A contre la quantité B est d'au moins 0,1, préférablement d'au moins 0,2, plus préférablement d'au moins 0,25, idéalement d'au moins 0,3.

14. Procédé selon l'une quelconque des revendications 11 à 13, **caractérisé en ce que** le poids total de charge minérale présente à l'état naturel (A+B) relativement au poids du polymère de polychlorure de vinyle est préférablement de 0,4 à 2,5, plus préférablement de 0,6 à 1,5, idéalement de 0,8 à 1,2.

15. Procédé selon l'une quelconque des revendications 11 à 14, comprenant en outre l'étape d'addition d'une aide de transformation dans une quantité de 0 à 15 % en poids, préférablement de 5 à 15 % en poids.

16. Procédé selon l'une quelconque des revendications 11 à 15, comprenant en outre l'étape d'addition d'un stabilisant thermique dans une quantité de 0 à 5 % en poids, préférablement de 1 à 4 % en poids, idéalement d'environ 4 % en poids, dans lequel ledit stabilisant thermique est préférablement un stabilisant de type thiol bloqué.

17. Granulé obtenu à l'étape c) du procédé selon l'une quelconque des revendications 11 à 16.

18. Utilisation d'un granulé ou d'un profilé selon l'une quelconque des revendications 1 à 10 ci-dessus comme élément de renforcement, préférablement dans un châssis de fenêtre ou une clôture.

19. Utilisation d'un granulé ou d'un profilé selon la revendication 18, dans laquelle ledit élément de renforcement est utilisé comme base pour une structure suspendue ou une fermeture telle qu'une monture.

20. Utilisation d'un granulé ou d'un profilé selon l'une quelconque des revendications 1 à 10 ci-dessus, dans laquelle ledit profilé est fixé avec des clous ou des viS.

## REFERENCES CITED IN THE DESCRIPTION

**Patent documents cited in the description**

- EP 0085778 A
- US 20070078191 A
- US 4368284 A
- US 5437826 A
- US 4455398 A

**Non-patent literature cited in the description**

- PVC Handbook. Hanser Gardner, 2005